# FASCICULE DE BREVET EUROPEEN

(11) **EP 3 956 385 B1**
(45) Date de publication et mention de la délivrance du brevet: **02.12.2026**
(21) Numéro de dépôt: 20727828.4
(22) Date de dépôt: 16.04.2020
(51) Int. Cl.: C08J 3/12, B29C 64/357, B33Y 10/00, B33Y 70/10, B29C 64/153, C08G 69/18

(54) **PARTICULES DE POUDRES DE POLYAMIDE ET LEUR UTILISATION DANS LES PROCEDES D'AGGLOMERATION EN POUDRE**
TEILCHEN AUS POLYAMIDPULVERN UND IHRE VERWENDUNG IN PULVERAGGLOMERATIONSVERFAHREN
PARTICLES OF POLYAMIDE POWDERS AND USE THEREOF IN POWDER AGGLOMERATION PROCESSES

(30) Priorité: 19.04.2019 FR 1904205
(43) Date de publication de la demande: 23.02.2022
(73) Titulaire: ARKEMA FRANCE, 92800 Puteaux (FR)
(72) Inventeur: CAMMAGE, Geoffroy, 27470 SERQUIGNY (FR); LEMAITRE, Arnaud, 27470 SERQUIGNY (FR); SOARES LATOUR, Emilie-Marie, 27470 SERQUIGNY (FR)
(74) Mandataire: Bandpay & Greuter
(86) Numéro de dépôt international: PCT/FR2020/000130
(87) Numéro de publication internationale: WO 2020/212662

(56) Documents cités:
- FR-A1- 2 910 907
- US-B2- 9 382 420
- DATABASE WPI Week 199745, 1997 Derwent World Patents Index; AN 1997-486876, XP002796349

## Description

### Domaine de l'invention

La présente invention concerne des particules de poudre polyamide ensemencés, et leur utilisation dans les procédés d'agglomération de poudre, couche par couche, par fusion pour fabriquer des objets tridimensionnels présentant un nettoyage facilité.

### Arrière--plan technique

La technologie d'agglomération de poudres de polyamide sert à fabriquer des objets en trois dimensions tels que des prototypes et des modèles, notamment dans les domaines automobile, nautique, aéronautique, aérospatial, médical (prothèses, systèmes auditifs, ...), du textile, de l'habillement, de la mode, de la décoration, des boîtiers pour l'électronique, de la téléphonie, de la domotique, de l'informatique, et de l'éclairage. Cette technologie permet également d'atteindre des géométries fines et complexes, impossibles à réaliser par les techniques classiques de moulage. Une telle technique est décrite par exemple dans le document US 9 382 420 B2.

L'agglomération de poudres par fusion (ci-après « frittage ») est provoquée par un rayonnement, tel que par exemple un faisceau laser (*laser sintering*), un rayonnement infra-rouge, un rayonnement UV, ou toute source de rayonnement électromagnétique permettant de faire fondre la poudre couche par couche pour fabriquer des objets tridimensionnels.

Dans le cas du frittage laser, on dépose une fine couche de poudre de polyamide sur une plaque horizontale maintenue dans une enceinte chauffée à une température située entre la température de cristallisation Tc et la température de fusion Tf de la poudre de polyamide. Le laser permet de fusionner des particules de poudre en différents points de la couche qui cristallise lentement après le passage du laser selon une géométrie correspondant à l'objet, par exemple à l'aide d'un ordinateur ayant en mémoire la forme de l'objet 3D et restituant cette dernière sous forme de tranches 2D. Ensuite, on abaisse la plaque horizontale d'une valeur correspondant à l'épaisseur d'une couche de poudre (par exemple entre 0,05 et 2 mm et généralement de l'ordre de 0,1 mm) puis on dépose une nouvelle couche de poudre, le laser permet de fusionner des particules de poudre selon une géométrie correspondant à cette nouvelle couche qui cristallise lentement selon une géométrie correspondant à l'objet et ainsi de suite. La procédure est répétée jusqu'à ce que l'on ait fabriqué tout l'objet. On obtient à l'intérieur de l'enceinte un objet entouré de poudre. Les parties qui n'ont pas été agglomérées sont donc restées à l'état de poudre. Après complet refroidissement, on sépare l'objet de la poudre qui peut être réutilisée pour une autre opération.

Lorsque la température de la poudre en machine s'approche trop de la température de fusion (Tf) de la poudre, cela entraîne une prise en masse autour des pièces (phénomène de « caking » en anglais), qui se manifeste par la présence d'agglomérats de poudre non désirés en certains endroits de la surface de l'objet, au lieu d'avoir une bonne définition de l'objet final. En fin de construction, aussi appelé « run », il est donc nécessaire d'entreprendre un nettoyage des pièces pour retirer cette poudre restée accrochée aux pièces, avant leur utilisation. Ce nettoyage se fait généralement par sablage ce qui peut conduire à la dégradation de certains éléments fins et/ou fragiles des pièces 3D construites.

On ne connait pas à l'heure actuelle d'autres techniques que le nettoyage des pièces pour remédier à ce problème. Aujourd'hui, pour tous les utilisateurs de machines 3D, la facilité et le temps de nettoyage des pièces sont deux facteurs importants dans le coût global de fabrication. Dans le cas particulier des poudres de polyamide, certains grades sont particulièrement longs à nettoyer. De plus, certaines géométries ne sont pas accessibles au nettoyage alors que la fabrication de pièces de géométries complexes et fines est justement l'avantage qu'apporte la construction 3D.

### Résumé de l'invention

La présente invention découle de la mise en évidence inattendue, par les inventeurs, que des particules de poudre de polyamide ensemencées, de type cœur/écorce, formées d'une écorce en polyamide de haute masse molaire et de haute température de fusion autour d'un cœur en polyamide facilitent et/ou diminuent le temps de nettoyage des objets obtenus par fabrication additive (aussi connu sous le terme impression 3D) à partir de ces poudres. Avantageusement, les inventeurs ont également mis en évidence que ces poudres de polyamide sont facilement recyclables.

La présente invention a donc pour objet une particule de poudre de polyamide (PA) ensemencée constituée par :
- un cœur en polyamide, de diamètre médian en volume D50 compris dans la gamme de 15 à 60 µm, et
- une écorce en polyamide,
caractérisée en ce que l'écorce présente une viscosité inhérente en solution et une température de fusion supérieures ou égales respectivement à celles du cœur.

La présente invention concerne également un procédé de fabrication de particule de poudre de polyamide telle que définie ci-dessus, par polymérisation anionique en solution dans un solvant, comprenant la polymérisation de l'écorce à partir de 2-pyrrolidone (lactame 4), de caprolactame (lactame 6), de 2-azacyclononanone (lactame 8), de lauryllactame (lactame 12) ou de leur mélange en présence d'un catalyseur, d'un activateur et d'au moins un amide choisi parmi les N, N'-alkylène bis amides autour d'une semence sélectionnée dans le groupe constitué du PA4, PA6, PA8, PA11, PA12, PA6/12, PA6.12, PA6.13, PA6.10, PA6.6 et PA10.10 qui constituera le cœur de la particule.

La présente invention concerne également un procédé de fabrication de particule de poudre selon l'invention par dissolution du polyamide de l'écorce dans un solvant à base d'alcool puis précipitation du polyamide de l'écorce autour du cœur de la particule.

La présente invention concerne également l'utilisation de poudre de polyamide telle que définie ci-dessus dans des composites, des revêtements de substrat, des papiers transfert ou pour fabriquer des compositions cosmétiques.

La présente invention concerne également l'utilisation de poudre de polyamide telle que définie ci-dessus pour fabriquer des objets par agglomération de ladite poudre par fusion provoquée par un rayonnement choisi parmi un faisceau laser, un rayonnement infrarouge ou un rayonnement UV.

La présente invention concerne également l'utilisation de poudre de polyamide telle que définie ci-dessus dans un procédé de fabrication additive pour diminuer le phénomène d'agglomération de poudre à la surface de l'objet.

La présente invention concerne également un procédé de fabrication d'objet par agglomération de poudre de polyamide telle que définie ci-dessus au cours duquel :
a. une fine couche de poudre (couche 1) est déposée sur une plaque horizontale maintenue dans une enceinte chauffée à une température située entre la température de cristallisation (Tc) et la température de fusion (Tf) de ladite poudre,
b. un laser ou un apport d'énergie électromagnétique permet l'agglomération des particules par fusion en différents points de la couche de poudre (couche 1) selon une géométrie correspondant à l'objet à fabriquer,
c. la plaque horizontale est ensuite abaissée d'une valeur correspondant à l'épaisseur d'une couche de poudre puis une nouvelle couche de poudre est déposée (couche 2),
d. le laser ou un apport d'énergie électromagnétique permet l'agglomération des particules par fusion de la couche de poudre (couche 2) selon une géométrie correspondant à cette nouvelle tranche de l'objet à fabriquer,
e. les étapes précédentes sont répétées jusqu'à ce que l'objet soit construit ;
f. on obtient à l'intérieur de l'enceinte un objet entouré de poudre ;
g. après complet refroidissement, l'objet est séparé de la poudre qui peut être réutilisée pour une autre opération.

### Description détaillée de l'invention

### Définitions

Par « impression 3D » ou « fabrication additive » au sens de l'invention, on entend tout procédé de fabrication de pièces en volume par ajout ou agglomération de poudre, couche par couche. Par « impression 3D » ou « fabrication additive » au sens de l'invention, on entend également les technologies de frittage sélectif utilisant un absorbeur, notamment les technologies connues sous les noms « *High* Speed Sintering » (HSS) et « *Multi-Jet Fusion* » (MJF).

Le terme « frittage » dans la présente description inclut tous ces procédés, quel que soit le type de rayonnement. Même si, dans le texte qui suit, on fait référence le plus souvent au procédé de frittage sélectif par laser, « *selective laser sintering* », ce qui est écrit pour ce procédé est bien entendu valable pour les autres procédés de fabrication.

Dans la présente description de l'invention, y compris dans les exemples ci-après, le D50 d'une poudre, aussi appelé « diamètre médian en volume », correspond à la valeur de la taille de particule qui divise la population examinée exactement en deux. Le D50 peut être mesuré selon la norme ISO 9276 - parties 1 à 6 : « Représentation de données obtenues par analyse granulométrique » ou selon la norme ISO 13319. De préférence, selon la norme ISO 13319 :2007. Dans la présente description, on utilise un granulomètre de type Multisizer 3 Coulter Counter de la société Beckman Coulter pour obtenir la distribution granulométrique de la poudre et en déduire le D50.

La viscosité inhérente en solution (notamment du polyamide, des poudres ou des pièces fabriquées par frittage) est mesurée selon la norme ISO 307 : 2007 à une concentration de 0,5% en poids en solution dans du m-crésol sur le poids total de la solution, à une température de 20°C, au moyen d'un viscosimètre Ubbelohde. L'analyse des caractéristiques thermiques du polyamide est faite par DSC selon la norme ISO 11357-3 « *Plastics* - *Differential Scanning Colorimetry (DSC) Part 3: Determination of temperature and enthalpy of melting and crystallization* ». Les températures qui intéressent ici plus particulièrement l'invention sont la température de fusion et l'enthalpie de fusion lors de la première chauffe (Tf1, ΔHf1), ainsi que la température de cristallisation (Tc). De préférence, une enthalpie de fusion élevée permet d'obtenir une meilleure définition géométrique des pièces fabriquées par procédé de fabrication additive.

On entend par « *Caking* » le phénomène d'agglomération des poudres qui se manifeste par la présence d'agglomérats de poudre non désirés en certains endroits de la surface de l'objet, au lieu d'avoir une bonne définition de l'objet final. Ce phénomène est observé lorsque la température de transformation dans la machine s'approche trop de la température de fusion (Tf) de la poudre.

### Particules de poudre polyamide

L'invention a pour objet une poudre de polyamide (PA) ensemencée constituée par une écorce en polyamide et un cœur en polyamide, le cœur et l'écorce étant soit de nature de polyamide identique mais de masses molaires en poids (Mw) différentes soit de natures de polyamide différentes.

Selon un mode de réalisation, le polyamide (PA) est un polyamide aliphatique ou un copolyamide aliphatique.

De préférence, l'écorce et le cœur sont en polyamide sélectionné dans le groupe constitué du PA4, PA6, PA8, PA11, PA12, PA6/12, PA6.12, PA6.13, PA6.10, PA6.6 et PA10.10.

De préférence, l'écorce et le cœur de la particule selon l'invention sont comme suit :
- écorce et cœur en PA6, ou
- écorce et cœur en PA12, ou
- écorce et cœur en PA6/12.

De préférence également, l'écorce et le cœur sont de natures de polyamide différentes. De préférence, l'écorce et le cœur de la particule selon l'invention sont comme suit :
- écorce en PA6 et un cœur choisi parmi le PA8, PA11, PA12, PA6/12, PA6.12, PA6.10, PA10.10 ; ou
- écorce en PA12 et un cœur choisi parmi le PA6/12, PA6.12 ; ou
- écorce en PA6/12 et un cœur choisi parmi le PA11, PA12, PA6.12, PA10.10, PA6.10.

De préférence, le cœur à un diamètre médian en volume (x) compris entre 15 et 60 µm,
Selon des modes de réalisations, le cœur à un diamètre médian en volume (x) compris entre 15 et 20 µm, ou entre 20 et 25 µm, ou entre 25 et 30 µm, ou entre 30 µm, ou entre 30 et 35 µm, ou entre 35 et 40 µm, ou entre 40 et 45 µm, ou entre 45 et 50 µm, ou entre 50 et 55 µm, ou entre 55 et 60 µm.

De préférence, l'écorce à une épaisseur (y) comprise entre 1 et 15 µm.

De préférence, la particule de poudre selon l'invention a un diamètre médian en volume (x + 2*y) compris entre 17 et 90 µm, plus préférablement entre 35 et 55 µm. De préférence, l'écorce a une température de fusion supérieure à 180°C, de préférence comprise dans la gamme de 183°C à 185°C.

De préférence, l'écorce a une viscosité inhérente comprise entre 1,20 et 1,50, de préférence entre 1,35 et 1,45.

De préférence, le cœur a une température de fusion supérieure à 140°C, de préférence comprise entre 175 et 180°C.

De préférence, le cœur a une viscosité inhérente comprise entre 0,30 et 1,30, de préférence entre 0,75 et 1,05.

De préférence, les particules de poudre selon l'invention ont une température de fusion supérieure à 180°C.

De préférence, les particules de poudre selon l'invention ont une viscosité inhérente comprise entre 1,20 et 1,35.

Avantageusement, les poudres de polyamide selon l'invention facilitent et diminuent le temps de nettoyage des objets construits par un procédé de fabrication additive. De manière avantageuse également, les poudres de polyamide selon l'invention diminuent le risque de casse lors du nettoyage d'objets présentant des géométries très fines.

### Procédé de fabrication de particule de poudre polyamide

Dans un mode de réalisation de l'invention les particules de poudre selon l'invention sont préparées par dissolution du polyamide de l'écorce dans un solvant à base d'alcool puis précipitation du polyamide de l'écorce autour du cœur de la particule. De préférence, la dissolution est réalisée sous pression et/ou chauffage. De préférence également, la dissolution est réalisée en présence du cœur de la particule en suspension dans ledit solvant. De préférence, la précipitation est réalisée par réduction de température et/ou extraction de solvant.

L'invention a également pour objet un procédé de fabrication de poudre par polymérisation anionique en solution dans un solvant.

### A. Les ingrédients de la polymérisation

### - Les monomères

De préférence, la polymérisation est réalisée en présence de monomère de lauryllactame (lactame 12), de caprolactame (lactame 6), de 2-pyrrolidone (lactame 4), de 2-azacyclononanone (lactame 8), ou de leur mélange, en solution dans un solvant du lactame ou du mélange en présence de semences (ou charge organique) qui sont des particules de poudre de PA4, PA6, PA8, PA11, PA12, PA6/12, PA6.12, PA6.13, PA6.10, PA6.6 et PA10.10 et d'un catalyseur, d'un activateur, et d'au moins un amide choisi parmi les N, N'-alkylène bis amide.

### - Le solvant

Le solvant utilisé dissout le monomère mais pas les particules de polymère qui se forment pendant la polymérisation. Avantageusement, le solvant est une coupe d'hydrocarbures paraffiniques dont la plage d'ébullition est comprise entre 120 et 170°C, de préférence entre 140 et 170°C.

Le solvant peut être sursaturé en monomère à la température de polymérisation. Différents moyens permettent de sursaturer le solvant en monomère. Un de ces moyens peut consister à saturer le solvant en monomère à une température supérieure à celle d'initiation, puis à abaisser la température jusqu'à la température d'initiation. Un autre moyen peut consister à sensiblement saturer le solvant en monomère à la température d'initiation, puis à ajouter, toujours à cette température, un amide primaire contenant de préférence de 12 à 22 atomes de carbone, comme par exemple l'oléamide, le N-stéaramide, l'érucamide, l'isostéaramide ou bien un N,N'-alkylène bis amide dont des exemples sont donnés plus loin.

Il est également possible de mettre en œuvre la polymérisation dans un solvant non sursaturé en monomère. Dans ce cas, le milieu réactionnel contient le monomère dissous dans le solvant à une concentration éloignée de la sursaturation à la température d'initiation.

### - Le catalyseur

De préférence, un catalyseur choisi parmi les catalyseurs usuels de la polymérisation anionique des lactames est utilisé. Il s'agit d'une base suffisamment forte pour conduire à un lactamate après réaction avec le lactame. Une combinaison de plusieurs catalyseurs est envisageable. A titre d'exemples non limitatifs, on peut citer l'hydrure de sodium, l'hydrure de potassium, le sodium, le méthylate et/ou l'éthylate de sodium. La quantité de catalyseur(s) introduite peut en général varier entre 0,5 et 3 moles pour 100 moles de monomère.

### - L'activateur

De préférence, on ajoute également un activateur dont le rôle est de provoquer et/ou accélérer la polymérisation. L'activateur est choisi parmi les lactames-N-carboxyanilides, les (mono)isocyanates, les polyisocyanates, les carbodiimides, les cyanamides, les acyllactames et acylcarbamates, les triazines, les urées, les imides N-substituées, les esters et le trichlorure de phosphore. Il peut éventuellement aussi s'agir d'un mélange de plusieurs activateurs. L'activateur peut aussi éventuellement être formé *in situ,* par exemple, par réaction d'un isocyanate d'alkyle avec le lactame pour donner un acyl-lactame.

De préférence, le rapport molaire catalyseur/activateur est compris entre 0,2 et 2, de préférence entre 0,8 et 1,2.

### - L'amide

De préférence, on ajoute également au moins un amide dont un est toujours un N,N'--alkylène bis amide. La quantité de N,N'-alkylène bis amide introduite est en général de l'ordre de 0,001 à 4 moles, de préférence de 0,075 à 2 moles pour 100 moles de monomère. Parmi les N,N'-alkylène bis amides particulièrement recommandées, on peut citer les N,N'-alkylène bis amides d'acides gras et mieux encore :
- N,N'-Ethyléne bis-stéaramide de formule C₁₇-H₃₅-C(=O)-NH-CH₂CH₂-NH-C(=O)-C₁₇H₃₅abrégé EBS ; et
- N,N'-Ethylène bis-oléamide de formule C₁₇H₃₃-C(=O)-NH-CH₂CH₂-NH-C(=O)-C₁₇H₃₃ abrégé EBO.
- N,N'-alkylène bispalmitamide, gadoléamide, cétoléamide, érucamide.

De préférence, on utilise EBS et/ou EBO.

On peut également ajouter un amide primaire contenant de préférence de 12 à 22 atomes de carbone. De préférence, cet amide est choisi parmi : l'oléamide, le N-stéaramide, l'isostéramide, l'érucamide.

### - La charge organique

Concernant la charge organique, il s'agit, de préférence, de poudres de polyamides homo ou copolyamide, de préférence de PA4, PA6, PA8, PA11, PA12, PA6/12, PA 6.12, PA6.13, PA6.10, PA 6.6 et PA10.10. A titre d'exemple, il est possible de citer les poudres d'Orgasol^{®} d'Arkema, les poudres fines Rilsan^{®} d'Arkema, les poudres Vestosint^{®} d'Evonik, les poudres MICROPAN^{®} de Chemopharma, etc.

De préférence les poudres de polyamide sont finement divisées.

La quantité de charge organique et le diamètre desdites charges permettent d'orienter dans le sens souhaité (petites particules ou grosses particules) la taille des particules finales obtenues au terme de la polymérisation.

### - Les autres charges ou additifs

On peut également ajouter dans le milieu réactionnel tout type de charges bien connus de l'homme du métier (pigments, colorants, noir de carbone, nanotubes de carbone...) ou additifs (antioxydants, anti-UV, plastifiants, etc.) à condition que tous ces composés soient bien secs et inertes vis-à-vis du milieu réactionnel.

### B. La polymérisation

La polymérisation anionique par ouverture de cycle lactame est conduite en continu ou bien de préférence, en discontinu (batch). En discontinu, on introduit le solvant, puis simultanément ou successivement le ou les monomère(s), éventuellement une N,N-alkylène bis amide, la charge, le catalyseur et l'activateur. Il est recommandé d'introduire d'abord le solvant et le ou les monomère(s) puis d'éliminer toute trace d'eau, par exemple à l'aide d'une distillation azéotropique, puis d'ajouter le catalyseur une fois le milieu anhydre. La charge peut être introduite par exemple après l'introduction du ou des monomère(s). Il peut être avantageux pour éviter la prise en masse ou la perte de contrôle de la polymérisation d'introduire l'activateur non pas en une seule fois mais par incréments ou bien à une vitesse d'introduction donnée.

On opère à la pression atmosphérique ou bien sous une pression légèrement supérieure (pression partielle du solvant chaud) et à une température comprise entre 20°C et la température d'ébullition du solvant. La température d'initiation et de polymérisation des lactames est en général comprise entre 70 et 150°C, de préférence entre 80 et 130°C. Avantageusement la température de polymérisation des lactames est inférieure à 120°C et supérieure à 70°C.

Le rapport pondéral [charge organique/le ou les monomère(s) introduit(s) dans le milieu réactionnel] exprimé en % est compris entre 0,001 et 65%, de préférence entre 0,005 et 45%, encore plus préférentiellement entre 0,01 et 30%, et avantageusement entre 0,05 et 20%.

De préférence, la poudre ensemencée, obtenue à l'issu de la polymérisation, est insoluble dans le solvant du monomère introduit préalablement dans le milieu réactionnel.

### Utilisation des particules de poudre polyamide

De préférence, la poudre de polyamide selon l'invention est utilisée dans un procédé de fabrication d'objets par agglomération de la poudre par fusion en utilisant un rayonnement ou procédé de frittage. Le rayonnement peut être choisi parmi n'importe quel rayonnement bien connu de l'homme du métier. A titre d'exemple de rayonnement, il est possible de citer un faisceau laser (laser *sintering*), un rayonnement infra-rouge, un rayonnement UV, ou toute source de rayonnement électromagnétique permettant de faire fondre la poudre couche par couche pour fabriquer des objets tridimensionnels.

Le dispositif utilisé peut-être n'importe quel dispositif de frittage bien connu de l'homme du métier. A titre d'exemple, il est possible de citer les dispositifs de frittages commercialisés par EOS, 3D Systems, Aspect, Trump Precision Machinery, Hewlett Packard, Sinterit, Sintratec, Sharebot, FormLabs, Sonda Sys, Farsoon, Prodways, Ricoh, Wematter3D, VoxelJet, Xaar, etc. A titre d'exemple de dispositifs de frittage, il est possible de citer EOSINT P396 et Formiga P100 d'EOS GmbH.

De préférence, l'objet fabriqué par agglomération de la poudre selon l'invention est un objet 3D. De préférence, cet objet est choisi parmi un prototypes, un modèle de pièce (« *rapid prototyping* »), une pièce finie en petite série (« rapid *manufacturing* ») pour les domaines automobile, nautique, aéronautique, aérospatial, médical (prothèses, systèmes auditifs, ...), le textile, l'habillement, la mode, la décoration, le domaine des boîtiers pour l'électronique, la téléphonie, la domotique, l'informatique, l'éclairage, le sport, et l'outillage industriel. Avantageusement, l'utilisation de la poudre de polyamide selon l'invention dans le procédé d'impression 3D permet de diminuer le phénomène d'agglomération de poudre à la surface de l'objet 3D. L'utilisation de la poudre selon l'invention en fabrication additive est particulièrement avantageuse car elle permet de faciliter et/ou diminuer le temps de nettoyage des objets obtenus par cette technologie.

L'utilisation de la poudre selon l'invention en fabrication additive est particulièrement avantageuse car elle est recyclable plusieurs fois, seule ou en mélange. En effet, la poudre qui n'a pas été transformée peut être récupérée par tamisage, ainsi le tamis retient les pièces 3D et laisse s'écoulée la poudre. De préférence, la poudre selon l'invention est recyclable au moins 3 fois, de préférence au moins 5 fois, plus préférablement au moins 10 fois.

De préférence, dans chaque cycle de construction, ou « run », la teneur de poudre recyclée est d'au moins 50%, de préférence d'au moins 60%, plus préférablement d'au moins 70% en poids, sur le poids total de poudre utilisée en machine à chaque run. Autrement dit, mis à part le premier run qui utilise 100% de poudre fraîche, chaque run suivant réutilise au moins 50%, de préférence au moins 60%, de préférence au moins 70%, en poids de poudre du run précédent qui n'a pas été frittée, sur le poids total de poudre utilisée en machine à chaque run.

Avant son utilisation, l'objet peut être facilement nettoyé au moyen de toute technique de nettoyage bien connu de l'homme du métier. A titre, d'exemple, l'objet peut être nettoyé à l'aide d'une sableuse.

Des exemples non limitatifs de l'invention sont donnés ci-après.

### Description de la figure

### Figure 1

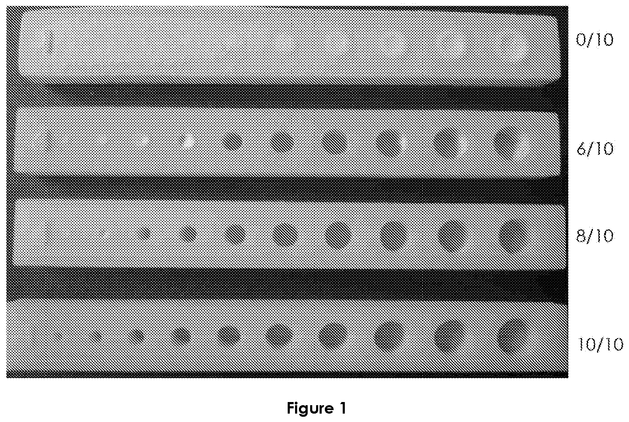

La figure 1 représente 4 pièces construites par un procédé de frittage sélectif par laser (*selective laser sintering, SLS*) possédant chacune 10 trous de tailles différentes. Les propriétés de nettoyage des pièces ont été étudiées à l'aide d'une soufflette à air comprimé sans sablage. Une note sur 10 est attribuée en fonction du nombre de trous débouchés. La première pièce en partant du haut a une note de 0/10. La deuxième pièce en partant du haut a une note de 6/10. La troisième pièce en partant du haut a une note de 8/10. La quatrième pièce en partant du haut a une note de 10/10.

### EXEMPLES

Les inventeurs ont étudié le phénomène d'agglomération des poudres (*caking*) qui se manifeste par la présence d'agglomérats de poudre en certains endroits de la surface de l'objet 3D fabriqué par un procédé de fabrication additive.

### 1. Préparation de poudre de polyamide selon l'invention

### 1.1. Préparation de poudre de PA12 ensemencé PA 12

On introduit dans le réacteur maintenu sous azote 2800 ml de solvant, puis successivement 716 g de lactame 12, 8,2 g d'EBS et 203 g d'Orgasol^{®} 2002 ES3 Nat 3 (poudre de PA12). Après avoir mis en route l'agitation à 350 t/min, on chauffe progressivement jusqu'à 110°C, puis on distille sous vide 360 ml de solvant afin d'entraîner par azéotropie toute trace d'eau qui pourrait être présente.

Après retour à la pression atmosphérique, on introduit alors rapidement sous azote le catalyseur anionique, 2,9 g d'hydrure de sodium à 60% de pureté dans de l'huile et on augmente l'agitation à 400 t/min, sous azote à 105°C pendant 30 minutes.

Grâce à une petite pompe doseuse, on réalise une injection continue dans le milieu réactionnel de l'activateur choisi, à savoir l'isocyanate de stéaryle (12,2 g rempli à 189,6 g avec du solvant) selon le programme suivant :
- 11 g/h de solution d'isocyanate pendant 180 minutes,
- 45 g/h de solution d'isocyanate pendant 210 minutes.

Parallèlement, la température est maintenue à 105°C pendant 360 minutes pendant l'injection, puis est montée à 130°C en 30 minutes et maintenue à cette température pendant 3 heures après la fin d'introduction de l'isocyanate.

En fin de polymérisation, la poudre de polyamide est en dispersion dans le solvant de synthèse. Le milieu réactionnel est refroidi à 80°C afin de pouvoir vidanger le réacteur : après séparation solide/liquide, la poudre de polyamide est placée à l'étuve à 75°C afin de la sécher du solvant.

### 1.2. Propriétés de la poudre

### 1.2.1 Méthode de mesure

Le D50 est mesuré selon la norme ISO 13319.

La viscosité inhérente est mesurée selon la norme ISO 307: 2007 à une concentration de 0,5% en poids en solution dans du métacrésol sur le poids total de la solution, à une température de 20°C.

La température de fusion et l'enthalpie de fusion sont mesurées par DSC selon la norme ISO 11357-3 « *Plastics* - *Differential Scanning Calorimetry (DSC) Part 3: Determination of temperature and enthalpy of melting and crystallization* ».

### 1.2.2. Résultats

Les particules de poudre de polyamide de type cœur/écorce obtenues ont un diamètre médian en volume de 43,1 µm, une viscosité inhérente de 1,27, une température de fusion de 184°C et une enthalpie de fusion de 115 J/g.

Le cœur a un diamètre médian en volume D50 de 30 µm, une viscosité inhérente de 1,02 et une température de fusion de 177°C.

L'écorce présente une épaisseur de 6,5 µm, et nous avons choisi les paramètres de synthèse en visant une viscosité inhérente de 1,40 et une température de fusion de 184°C.

### 2. Exemple comparatif

### 2.1. Exemple comparatif 1 : poudre de PA 12 (PA 2200, produit commercialisé par EOS)

Les particules de poudre de PA 2200 ont un diamètre médian en volume de 52,7 µm, une viscosité inhérente de 1,00, une température de fusion de 186°C et une enthalpie de fusion de 125 J/g.

### 2.2. Exemple comparatif 2 : poudre de PA 12 ensemencée silice

Les particules de poudre PA12 suivant l'exemple 2 du brevet FR2867190 ont un diamètre moyen en volume de 51 µm sans agglomérat, une viscosité inhérente de 1,12, une température de fusion de 184°C et une enthalpie de fusion de 118 J/g.

### 3. Evaluation de l'agglomération des poudres

### 3.1. Mode opératoire

Pour évaluer le phénomène d'agglomération des poudres par fusion, des pièces possédants 10 trous de tailles différentes, particulièrement sensibles au caking, ont été construites par un procédé de frittage sélectif par laser (*selective laser stintering, SLS*) en utilisant les particules de poudres selon l'invention et les poudres selon les exemples comparatifs 1 et 2.

Les propriétés de nettoyage des pièces ont été étudiées à l'aide d'une soufflette à air comprimé sans sablage. Plus le nombre de trous débouchés de la pièce est important, plus le nettoyage sera facile. Une note sur 10 est attribuée en fonction du nombre de trous débouchés. La Figure 1 représente des pièces ayant 10 trous de tailles différentes et des exemples de notes pouvant être attribuées en fonction du nombre de trous débouchés. Une note de 10/10 est attribuée aux poudres qui auront le plus de facilité à être nettoyer à l'inverse une note de 0/10 est attribuée aux poudres qui s'agglomèrent fortement et qui seront le plus difficile à nettoyer (induisant un temps plus long de nettoyage et pouvant conduire à la dégradation de certains éléments fins et/ou fragiles des pièces 3D construites).

### 3.2. Conditions de transformation

Les conditions de laser utilisées pour ce test sont les conditions préconisées pour la poudre de PA 12 (PA2200) :

**[Tableau 1]**

| **Température de la chambre d'exposition** | | 172°C |
|---|---|---|
| **Température de la chambre de retrait** | | 140°C |
| **Contour** | Puissance laser | 16 W |
| | Vitesse | 1500 mm/s |
| **Hachurage** | Puissance | 18 W |
| | Vitesse | 3000 mm/s |
| | Déplacement du rayon | 0,20 mm |
| | Energie | 0,3 mj/mm³ |

### 3.3. Résultats

Dans les mêmes conditions de marche en machine laser sintering (LS) :
- La poudre selon l'invention a obtenu une note de 8/10 car 8 trous sur 10 se débouchent ;
- La poudre PA 2200 (exemple comparatif 1) a obtenu une note de 7/10 car 7 trous sur 10 se débouchent ;
- La poudre de PA12 ensemencé silice (exemple comparatif 2) a obtenu une note de 0/10 car les trous de la pièce ne se débouchent pas lors du nettoyage.

Par conséquent, la poudre selon la présente l'invention est moins sujette à la formation d'agglomérats de poudres non désirés en comparaison des poudres de polyamide usuelles. Ceci est lié au fait que les poudres selon l'invention forment moins d'agglomérats de poudre à la surface des objets fabriqués. Les objets présentent ainsi une meilleure définition finale et sont plus faciles à nettoyer que les objets objets fabriqués à partir des poudres usuelles.

## Revendications

1. Particule de poudre de polyamide (PA) ensemencée constituée par :
- un cœur en polyamide, de diamètre médian en volume D50 mesuré selon la norme ISO 13319 compris dans la gamme de 15 à 60 µm, et
- une écorce en polyamide,
**caractérisée en ce que** l'écorce présente une viscosité inhérente en solution et une température de fusion supérieures respectivement à celles du cœur.

2. Particule selon la revendication 1, dans laquelle l'écorce et le cœur de la particule sont en polyamide sélectionné dans le groupe constitué du PA4, PA6, PA8, PA11, PA12, PA6/12, PA6.12, PA6.13, PA6.10, PA6.6 et PA10.10.

3. Particule selon la revendication 1 ou 2, dans laquelle l'écorce et le cœur de la particule sont de même nature :
- écorce et cœur en PA6, ou
- écorce et cœur en PA12, ou
- écorce et cœur en PA6/12 ;
ou dans laquelle l'écorce et le cœur de la particule sont de nature différente :
- écorce en PA6 et un cœur choisi parmi le PA8, PA11, PA12, PA6/12, PA6.12, PA6.10, PA10.10 ; ou
- écorce en PA12 et un cœur choisi parmi le PA6/12, PA6.12 ; ou
- écorce en PA6/12 et un cœur choisi parmi le PA11, PA12, PA6.12, PA10.10 et PA6.10.

4. Particule selon l'une quelconque des revendications 1 à 3, dans laquelle l'écorce présente une viscosité inhérente en solution, telle que mesurée selon la norme ISO 307: 2007 à une concentration de 0,5% en poids en solution dans du métacrésol sur le poids total de la solution et à une température de 20°C, comprise dans la gamme de 1,20 à 1,50, de préférence de 1,35 à 1,45.

5. Particule selon l'une quelconque des revendications 1 à 4, dans laquelle l'écorce présente une température de fusion (Tf1) supérieure à 180°C, de préférence comprise dans la gamme de 183°C à 185°C, la température de fusion étant mesurée par DSC selon la norme ISO 11357-3 "Plastics - Differential Scanning Calorimetry (DSC) Part 3 : Determination of temperature and enthalpy of melting and crystallization ».

6. Particule selon l'une quelconque des revendications 1 à 5, **caractérisée en ce que** l'écorce est obtenue par polymérisation anionique ou par dissolution et précipitation de polyamide autour du cœur de la particule.

7. Particule selon l'une quelconque des revendications 1 à 6, **caractérisée en ce qu'**elle présente un diamètre médian en volume D50 compris dans la gamme de 17 à 90 µm.

8. Procédé de fabrication de particule de poudre selon l'une quelconque des revendications 1 à 6 par polymérisation anionique en solution dans un solvant, comprenant la polymérisation de l'écorce à partir de 2-pyrrolidone, de caprolactame, de lauryllactame, de 2-azacyclononanone ou de leur mélange en présence d'un catalyseur, d'un activateur, d'au moins un amide choisi parmi les N, N'-alkylène bis amide, de préférence parmi l'EBS et l'EBO, et d'une charge organique pour le cœur de la particule sélectionné dans le groupe constitué du PA4, PA6, PA8, PA11, PA12, PA6/12, PA6.12, PA6.13, PA6.10, PA6.6 et PA10.10.

9. Procédé selon la revendication 8, **caractérisé en ce qu'**on a, en plus du N, N'-alkylène bis amide, un autre amide choisi parmi l'oléamide, le N-stéaramide, l'isostéaramide et l'érucamide.

10. Procédé de fabrication de particule de poudre selon l'une quelconque des revendications 1 à 7 par dissolution du polyamide de l'écorce dans un solvant à base d'alcool puis précipitation du polyamide de l'écorce autour du cœur de la particule ; dans lequel de préférence la dissolution est réalisée sous pression et/ou chauffage, et/ou est réalisée en présence du cœur de la particule en suspension dans ledit solvant.

11. Procédé selon la revendication 10, dans lequel la précipitation est réalisée par réduction de température et/ou extraction de solvant.

12. Utilisation de poudre selon l'une des revendications 1 à 7, dans des composites, des revêtements de substrat, des papiers transfert ou pour fabriquer des compositions cosmétiques.

13. Utilisation de poudre selon l'une des revendications 1 à 7, pour fabriquer des objets par agglomération de ladite poudre par fusion provoquée par un rayonnement choisi parmi un faisceau laser, un rayonnement infrarouge ou un rayonnement UV.

14. Utilisation de poudre selon l'une des revendications 1 à 7, dans un procédé d'impression 3D pour diminuer le phénomène de mottes de poudre agglomérées à la surface de l'objet 3D.

15. Procédé de fabrication d'objet par agglomération de la poudre selon l'une des revendications 1 à 7 au cours duquel :
a. une fine couche de poudre (couche 1) est déposée sur une plaque horizontale maintenue dans une enceinte chauffée à une température située entre la température de cristallisation (Tc) et la température de fusion (Tf) de ladite poudre,
b. un laser ou un apport d'énergie électromagnétique permet l'agglomération des particules par fusion en différents points de la couche de poudre (couche 1) selon une géométrie correspondant à l'objet à fabriquer,
c. la plaque horizontale est ensuite abaissée d'une valeur correspondant à l'épaisseur d'une couche de poudre puis une nouvelle couche de poudre est déposée (couche 2),
d. le laser ou un apport d'énergie électromagnétique permet l'agglomération des particules par fusion de la couche de poudre (couche 2) selon une géométrie correspondant à cette nouvelle tranche de l'objet à fabriquer,
e. les étapes précédentes sont répétées jusqu'à ce que l'objet soit construit ;
f. on obtient à l'intérieur de l'enceinte un objet entouré de poudre ;
g. après complet refroidissement, l'objet est séparé de la poudre qui peut être réutilisée pour une autre opération.

## Patentansprüche

1. Besätes Teilchen aus Polyamid(PA)-Pulver, bestehend aus:
- einem Polyamidkern mit einem gemäß der Norm ISO 13319 gemessenen Volumenmediandurchmesser D50 im Bereich von 15 bis 60 µm, und
- einer Polyamidschale,
**dadurch gekennzeichnet, dass** die Schale eine inhärente Viskosität in Lösung und eine Schmelztemperatur aufweist, die jeweils höher als diejenigen des Kerns sind.

2. Teilchen nach Anspruch 1, wobei die Schale und der Kern des Teilchens aus einem Polyamid bestehen, das aus der aus PA4, PA6, PA8, PA11, PA12, PA6/12, PA6.12, PA6.13, PA6.10, PA6.6 und PA10.10 bestehenden Gruppe ausgewählt ist.

3. Teilchen nach Anspruch 1 oder 2, wobei die Schale und der Kern des Teilchens gleicher Art sind:
- Schale und Kern aus PA6, oder
- Schale und Kern aus PA12, oder
- Schale und Kern aus PA6/12;
oder wobei die Schale und der Kern des Teilchens unterschiedlicher Art sind:
- Schale aus PA6 und ein Kern, ausgewählt aus PA8, PA11, PA12, PA6/12, PA6.12, PA6.10, PA10.10; oder
- Schale aus PA12 und ein Kern, ausgewählt aus PA6/12, PA6.12; oder
- Schale aus PA6/12 und ein Kern, ausgewählt aus PA11, PA12, PA6.12, PA10.10 und PA6.10.

4. Teilchen nach einem der Ansprüche 1 bis 3, wobei die Schale eine inhärente Viskosität in Lösung aufweist, die gemäß der Norm ISO 307:2007 bei einer Konzentration von 0,5 Gew.-% in einer Lösung in Metakresol, bezogen auf das Gesamtgewicht der Lösung, und bei einer Temperatur von 20 °C gemessen wird und im Bereich von 1,20 bis 1,50, vorzugsweise von 1,35 bis 1,45, liegt.

5. Teilchen nach einem der Ansprüche 1 bis 4, wobei die Schale eine Schmelztemperatur (Tf1) von mehr als 180 °C, vorzugsweise im Bereich von 183 °C bis 185 °C, aufweist, wobei die Schmelztemperatur mittels DSC gemäß der Norm ISO 11357-3 "Kunststoffe - Dynamische Differenz-Thermoanalyse (DSC) Teil 3: Bestimmung der Schmelz- und Kristallisationstemperatur und der Schmelz- und Kristallisationsenthalpie" gemessen wird.

6. Teilchen nach einem der Ansprüche 1 bis 5, **dadurch gekennzeichnet, dass** die Schale durch anionische Polymerisation oder durch Lösen und Ausfällen von Polyamid um den Kern des Teilchens herum erhalten wird.

7. Teilchen nach einem der Ansprüche 1 bis 6, **dadurch gekennzeichnet, dass** es einen Volumenmediandurchmesser D50 im Bereich von 17 bis 90 µm aufweist.

8. Verfahren zur Herstellung eines Pulverteilchens nach einem der Ansprüche 1 bis 6 durch anionische Polymerisation in Lösung in einem Lösungsmittel, das die Polymerisation der Schale ausgehend von 2-Pyrrolidon, Caprolactam, Lauryllactam, 2-Azacyclononanon oder deren Gemisch in Gegenwart eines Katalysators, eines Aktivators, mindestens eines aus den N,N'-Alkylenbisamiden, vorzugsweise aus EBS und EBO, ausgewählten Amids und eines organischen Füllstoffs für den Kern des Teilchens umfasst, der aus der aus PA4, PA6, PA8, PA11, PA12, PA6/12, PA6.12, PA6.13, PA6.10, PA6.6 und PA10.10 bestehenden Gruppe ausgewählt ist.

9. Verfahren nach Anspruch 8, **dadurch gekennzeichnet, dass** zusätzlich zu dem N,N'-Alkylenbisamid ein weiteres Amid vorhanden ist, das aus Oleamid, N-Stearamid, Isostearamid und Erucamid ausgewählt ist.

10. Verfahren zur Herstellung eines Pulverteilchens nach einem der Ansprüche 1 bis 7 durch Lösen des Polyamids der Schale in einem Lösungsmittel auf Alkoholbasis und anschließendes Ausfällen des Polyamids der Schale um den Kern des Teilchens herum; wobei das Lösen vorzugsweise unter Druck und/oder Erwärmung erfolgt und/oder in Gegenwart des in dem Lösungsmittel suspendierten Kerns des Teilchens erfolgt.

11. Verfahren nach Anspruch 10, wobei die Ausfällung durch Temperaturabsenkung und/oder Lösungsmittelextraktion durchgeführt wird.

12. Verwendung von Pulver nach einem der Ansprüche 1 bis 7 in Verbundwerkstoffen, Substratbeschichtungen, Transferpapieren oder zur Herstellung kosmetischer Zusammensetzungen.

13. Verwendung von Pulver nach einem der Ansprüche 1 bis 7 zur Herstellung von Gegenständen durch Agglomeration des Pulvers mittels Schmelzen, das durch eine aus einem Laserstrahl, Infrarotstrahlung oder UV-Strahlung ausgewählte Strahlung bewirkt wird.

14. Verwendung von Pulver nach einem der Ansprüche 1 bis 7 in einem 3D-Druckverfahren zur Verringerung des Phänomens von Klumpen aus agglomeriertem Pulver an der Oberfläche des 3D-Gegenstands.

15. Verfahren zur Herstellung eines Gegenstands durch Agglomeration des Pulvers nach einem der Ansprüche 1 bis 7, wobei:
a. eine dünne Pulverschicht (Schicht 1) auf einer horizontalen Platte abgeschieden wird, die in einer auf eine zwischen der Kristallisationstemperatur (Tc) und der Schmelztemperatur (Tf) des Pulvers liegende Temperatur beheizten Kammer gehalten wird,
b. ein Laser oder eine Zufuhr elektromagnetischer Energie die Agglomeration der Teilchen durch Schmelzen an verschiedenen Punkten der Pulverschicht (Schicht 1) gemäß einer Geometrie ermöglicht, die dem herzustellenden Gegenstand entspricht,
c. die horizontale Platte anschließend um einen Wert abgesenkt wird, der der Dicke einer Pulverschicht entspricht, und dann eine neue Pulverschicht abgeschieden wird (Schicht 2),
d. der Laser oder eine Zufuhr elektromagnetischer Energie die Agglomeration der Teilchen durch Schmelzen der Pulverschicht (Schicht 2) gemäß einer Geometrie ermöglicht, die diesem neuen Abschnitt des herzustellenden Gegenstands entspricht,
e. die vorhergehenden Schritte wiederholt werden, bis der Gegenstand aufgebaut ist;
f. innerhalb der Kammer ein von Pulver umgebener Gegenstand erhalten wird;
g. nach vollständigem Abkühlen der Gegenstand von dem Pulver getrennt wird, das für einen weiteren Vorgang wiederverwendet werden kann.

## Claims

1. Seeded polyamide (PA) powder particle constituted of:
- a polyamide core having a volume median diameter D50, measured according to the Standard ISO 13319, within the range of 15 to 60 µm, and
- a polyamide shell,
**characterized in that** the shell presents an inherent viscosity in solution and a melting temperature respectively greater than those of the core.

2. The particle according to claim 1, wherein the shell and the core of the particle are in polyamide selected from among the group constituted of PA4, PA6, PA8, PA11, PA12, PA6/12, PA6.12, PA6.13, PA6.10, PA6.6 and PA10.10.

3. The particle according to claim 1 or 2, wherein the shell and the core of the particle are of the same type:
- shell and core in PA6, or
- shell and core in PA12, or
- shell and core in PA6/12;
or wherein the shell and the core of the particle are of different types:
- shell made of PA6 and a core selected from among PA8, PA11, PA12, PA6/12, PA6.12, PA6.10, PA10.10; or
- shell in PA12 and a core selected from among PA6/12, PA6.12; or
- shell in PA6/12 and a core selected from among PA11, PA12, PA6.12, PA10.10 and PA6.10.

4. The particle according to any one of claims 1 to 3, wherein the shell presents an inherent viscosity in solution, such as measured according to the standard ISO 307:2007 at a concentration of 0.5% by weight in solution in meta-cresol, based on the total weight of the solution, and at a temperature of 20°C, within the range of 1.20 to 1.50, preferably 1.35 to 1.45.

5. The particle according to any one of claims 1 to 4, wherein the shell presents a melting temperature (Tf1) greater than 180°C, preferably within the range of 183°C to 185°C, the melting temperature being measured by DSC according to the standard ISO 11357-3 "Plastics - Differential Scanning Calorimetry (DSC) Part 3: Determination of temperature and enthalpy of melting and crystallization".

6. The particle according to any one of claims 1 to 5, **characterized in that** the shell is obtained by anionic polymerization or by dissolution and precipitation of the polyamide around the core of the particle.

7. The particle according to any one of claims 1 to 6, **characterized in that** it presents a volume median diameter D50 within the range of 17 to 90 µm.

8. Method for manufacturing a powder particle according to any one of claims 1 to 6 by anionic polymerization in solution in a solvent, comprising polymerizing the shell from 2-pyrrolidone, caprolactam, laurolactam, 2-azacyclononanone or a mixture thereof in the presence of a catalyst, an activator, at least one amide selected from N,N'-alkylene bisamides, preferably from among EBS and EBO, and an organic filler for the core of the particle selected from the group constituted of PA4, PA6, PA8, PA11, PA12, PA6/12, PA6.12, PA6.13, PA6.10, PA6.6 and PA10.10.

9. The method according to claim 8, **characterized in that**, in addition to the N,N'-alkylene bisamide, there is another amide selected from oleamide, N-stearamide, isostearamide and erucamide.

10. The method for manufacturing a powder particle according to any one of claims 1 to 7 by dissolving the polyamide of the shell in an alcohol-based solvent and then precipitation of the polyamide of the shell around the core of the particle; wherein preferably the dissolution is carried out under pressure and/or heating, and/or is carried out in the presence of the core of the particle suspended in said solvent.

11. The method according to claim 10, wherein the precipitation is carried out by reducing the temperature and/or extraction of the solvent.

12. Use of the powder according to any one of claims 1 to 7, in composites, substrate coatings, transfer papers or for manufacturing cosmetic compositions.

13. Use of the powder according to any one of claims 1 to 7 for manufacturing objects by agglomeration of said powder by fusion caused by radiation selected from among a laser beam, infrared radiation or UV radiation.

14. Use of the powder according to one of claims 1 to 7 in a 3D printing method to reduce the phenomenon of agglomerated powder clumps on the surface of the 3D object.

15. The method for manufacturing an object by agglomeration of the powder according to one of claims 1 to 7, during which:
a. a thin layer of powder (layer 1) is deposited on a horizontal plate maintained in an enclosure heated to a temperature between the crystallization temperature (Tc) and the melting temperature (Tf) of said powder
b. a laser or an input of electromagnetic energy allows the particles to be agglomerated by melting of the powder layer (layer 1), at different points according to a geometry corresponding to the object to be manufactured
c. the horizontal plate is then lowered by a value corresponding to the thickness of one powder layer, and then a new powder layer is deposited (layer 2)
d. the laser or an input of electromagnetic energy allows the particles of the powder layer (layer 2) to be agglomerated by melting according to a geometry corresponding to this new section of the object to be manufactured
e. the preceding steps are repeated until the object is built;
f. an object surrounded by powder is obtained inside the enclosure;
g. after complete cooling, the object is separated from the powder, which can be reused for another operation.
